Europäisches Patentamt

European Patent Office

Office européen des brevets

(11) Publication number: **0 266 464**
**B1**

## EUROPEAN PATENT SPECIFICATION

(45) Date of publication of the patent specification:
**13.09.89**

(51) Int. Cl.⁴: **F16B 41/00**

(21) Application number: **86308621.1**

(22) Date of filing: **05.11.86**

(54) Bolt security device.

(43) Date of publication of application:
**11.05.88 Bulletin 88/19**

(45) Publication of the grant of the patent:
**13.09.89 Bulletin 89/37**

(84) Designated Contracting States:
**DE FR GB**

(56) References cited:
**US-A- 1 397 101**
**US-A- 2 228 738**
**US-A- 4 010 788**

(73) Proprietor: **BRAMMALL, INC., P.O.
Box 208 1100 Wohlert, Angola Indiana 46703(US)**

(72) Inventor: **Bystry, Jerry A., R.R. no 3, State Road 120,
Orland Indiana 46776(US)**
Inventor: **Penick, Clarence A., Jr., R.R. no 1, Hudson
Indiana 46747(US)**
Inventor: **Bledsoe, Jack E., R.R. no 2 box 200-20,
Fremont Indiana 46737(US)**
Inventor: **Loynes, Leslie M., R.R. no 1, Box 150-C,
Fremont Indiana 46737(US)**
Inventor: **Eilert, Marc C., 5355 County Road 31, Auburn
Indiana(US)**

(74) Representative: **Thomson, Roger Bruce et al, POLLAK
MERCER & TENCH High Holborn House 52-54 High
Holborn, London WC1V 6RY(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates in general to security devices and in particular to a unique bolt lock which comprises two members and a spring into which the head of the bolt is received.

U.S. patent 4 010 788 discloses a bolt seal with a threaded bolt upon which a spin lock can be received.

U.S. patent 2 228 738 describes a security seal for preventing relative movement between two parts, such as of a valve. The seal comprises a shank having a shoulder thereon at one end thereof, a hollow head for the shank arranged to receive the shoulder, and means for securing the head on the shank including a resilient element within the head for engaging the shoulder formed on the shank and a destructible cover therefor arranged to close the end of the head and render the resilient element inaccessible and means within the head for retaining the cover in place.

In accordance with the present invention there is provided a security device comprising a bolt formed with a head on one end and a shaft portion extending from said head and formed with a groove and shoulder near the second end, a locking mechanism comprising a shoulder cap formed with a central opening through which the shaft of the bolt can extend, a nipple cap attached to said shoulder cap and having a cover portion for covering the central opening of said shoulder cap, and a spring member comprising locking fingers with ends separated to form a central opening which is smaller than said shaft portion of said bolt such that the second end of said bolt can be forced into said shoulder cap, said nipple cap and said spring member so that said fingers can be received in said groove of said bolt to engage said shoulder to lock said locking mechanism to said bolt so that it cannot be removed without destroying said bolt and/or said locking mechanism, and characterised in that the spring member has an outer edge of generally disc shape which is held between the shoulder cap and the nipple cap and also has a central truncated conical shaped portion in which grooves are formed to define the locking fingers.

The bolt can be different lengths and diameters and the lock cannot be removed from the bolt without damaging the structure so that it would be obvious to an observer that the bolt and lock had been tampered with.

These and other features of the invention will be readily apparent from the following description of one preferred embodiment thereof taken in conjunction with the accompanying drawings, in which:

Fig. 1 is a sectional view illustrating the bolt and locking mechanism in use;
Fig. 2 is an end plan view illustrating the locking device;
Fig. 3 is a partial sectional view through the locking device;
Fig. 4 is a sectional view taken on line IV-IV in Fig. 3; and
Fig. 5 is a sectional view illustrating the locking spring of the invention.

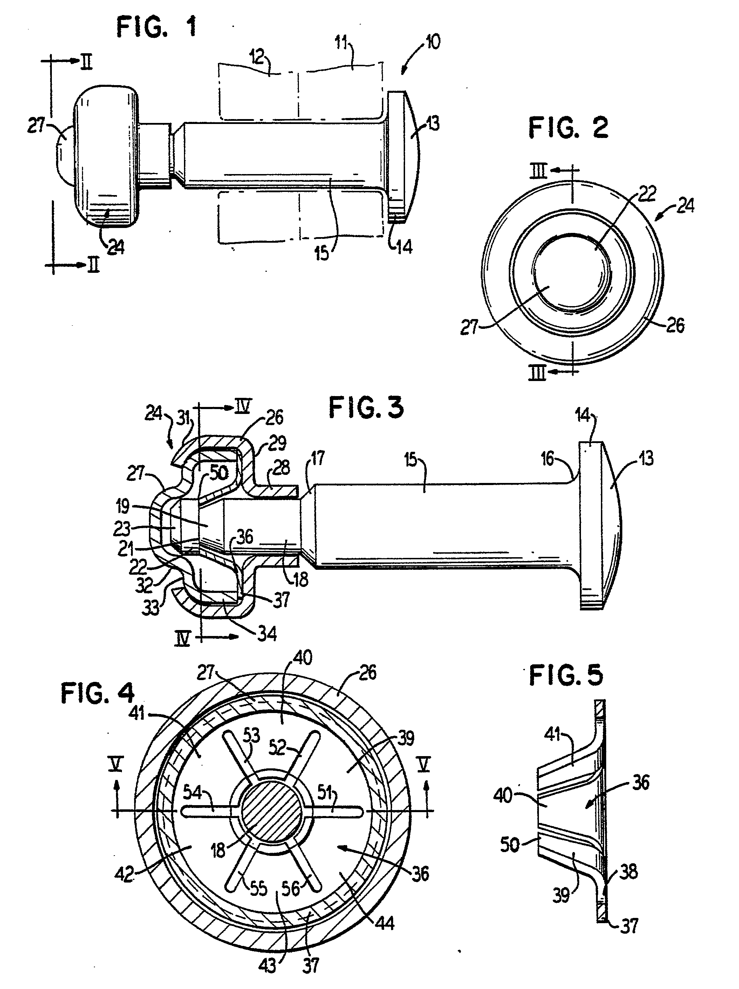

Fig. 1 illustrates the bolt lock of the invention designated generally as 10 which comprises a bolt having a head 13 with a curved surface and a cylindrical portion 14 which is attached by a fillet 16 to the main shaft 15 of the bolt. The tapered portion 17 connects the main portion 15 to a smaller portion 18 which is formed with a groove 19 by tapering a portion of the smaller portion 18 down to the shoulder 21. Cylindrical head portion 22 joins the shoulder (21) and has a tapered end 23 as illustrated.

A locking mechanism 24 comprises three parts comprising a shoulder cap 26, a nipple cap 27 and a spring member 36. The shoulder cap has a first cylindrical portion 28 which in the locked position fits around the smaller portion 18 of the bolt. The shoulder cap also has outwardly extending portion 29 and a cover portion comprising an outer curved portion 31 which locks the nipple cap 27 and the spring 36. The nipple cap 27 has a cylindrical portion 34 and an inwardly 33 extending cover portion 33 which forms a cap that covers the end 23 of the bolt.

The spring 36 is locked between the members 26 and 27 as illustrated in Fig. 3. The spring 36 has a disc shaped portion 38 formed with an outer edge 37 and a generally truncated conical portion which is separated by slots 51, 52, 53, 54, 55 and 56 so as to form inwardly extending fingers 39 to 44 as illustrated in Fig. 4. The ends 50 of the fingers 39 to 44 engage the shoulder 21 of the bolt portion 22 when the bolt is inserted into the locking mechanism 24.

In use, the bolt 10 is inserted through a pair of members 11 and 12 formed with a central opening through which the main body portion 15 of the bolt extends and the locking mechanism 24 is pressed onto the end 23 of the bolt. The tapered end 23 separates the fingers 39 to 44 such that they ride up on the portion 22 until the fingers are received in the groove 19 and then lock behind the shoulder 21 of the bolt portion 22 as illustrated in Fig. 3.

After the locking mechanism has been inserted onto the portion 22 of the bolt it can be rotated relative to the bolt but it cannot be removed, since the locking fingers 39 to 44 engage the shoulder 21 and cannot be removed therefrom.

In a particular embodiment the bolt was made of AISI type 4037 steel and the main shaft portion 15 was designed so that it would withstand a 90° bend without cracking or breaking.

The shoulder cap 26 was formed of 17 gauge (0.054) DQ CRS. The spring 36 was formed of 24 gauge (0.024) CRA spring steel SAE 1050 or equivalent.

## Claims

1. A security device comprising a bolt formed with a head (13) on one end and a shaft portion (15) extending from said head and formed with a groove (19) and shoulder (21) near the second end, a locking mechanism comprising a shoulder cap (26) formed with a central opening through which the shaft (15) of the bolt can extend, a nipple cap (27) attached to said shoulder cap and having a cover portion (33) for covering the central opening of said shoulder cap, and a spring member (36) comprising locking

fingers (39–44) with ends separated to form a central opening which is smaller than said shaft portion of said bolt such that the second end of said bolt can be forced into said shoulder cap, said nipple cap and said spring member so that said fingers can be received in said groove (19) of said bolt to engage said shoulder (21) to lock said locking mechanism to said bolt so that it cannot be removed without destroying said bolt and/or said locking mechanism, characterised in that the spring member (36) has an outer edge of generally disc shape which is held between the shoulder cap (26) and the nipple cap (27) and also has a central truncated conical shaped portion in which grooves (51–56) are formed to define the locking fingers (39–44).

2. A security device according to claim 1, characterised in that said second end of said bolt is tapered (23) so as to spread said fingers (39–44) of said spring member (36).

3. A security device according to claim 1 or 2, characterised in that said shaft portion (15) of said bolt is made of material such that it can be bent 90° without fracturing or breaking.

4. A security device according to any preceding claim, characterised in that said shaft portion of said bolt has two portions with a first portion (15) near the head (13) of the bolt having a larger diameter than the second portion (18) remote from the head of said bolt.

## Patentansprüche

1. Sicherungsvorrichtung mit einem an einem Ende mit einem Kopf (13) und einem sich von dem Kopf erstreckenden und benachbart dem anderen Ende mit einer Nut (19) und einer Schulter (21) ausgeformten Schaftabschnitt (15) bestehenden Bolzen, einer mit einer zentralen Öffnung, durch die sich der Schaft (15) des Bolzens erstrecken kann, versehenen Schulterkappe (26), einer Nippelkappe (27), die an der Schulterkappe angebracht ist und einen Abdeckabschnitt (33) zum Abdecken der zentralen Öffnung der Schulterkappe hat, und mit einem Federelement (36), das Verriegelungsfinger (39–44) mit voneinander getrennten Enden aufweist zur Bildung einer zentralen Öffnung, deren Durchmesser geringer ist als der Durchmesser des Schaftabschnittes des Bolzens, so daß das andere Ende des Bolzens in die Schulterkappe, die Nippelkappe und das Federelement derart gezwungen werden kann, daß die Finger von der Nut (19) des Bolzens zur Verriegelung der Verriegelungseinrichtung mit dem Bolzen unter Eingriff mit der Schulter aufgenommen werden können, so daß der Bolzen ohne Zerstörung des Bolzens und/oder der Verriegelungeinrichtung nicht entfernt werden kann, dadurch gekennzeichnet, daß das Federelement (36) einen im wesentlichen scheibenförmigen Außenrand hat, der zwischen der Schulterkappe (26) und der Nippelkappe (27) gehalten wird, und weiter einen zentralen, stummelartigen, konisch geformten Abschnitt aufweist, in dem Kerben (51–56) zur Bildung der Verriegelungsfinger ausgeformt sind.

2. Sicherheitsvorrichtung nach Anspruch 1, dadurch gekennzeichnet, daß das andere Ende des Bolzens derart angeschrägt (23) ist, daß er die Finger (39, 44) des Federelements (36) spreizt.

3. Sicherheitsvorrichtung nach Anspruch 1 oder 2, dadurch gekennzeichnet, daß der Schaftabschnitt (15) des Bolzens aus einem Material besteht, das ohne zu Brechen nicht um mehr als 90° gebogen werden kann.

4. Sicherheitsvorrichtung nach einem der vorangehenden Ansprüche, dadurch gekennzeichnet, daß der Schaftabschnitt des Bolzens zwei Abschnitte hat, wobei der erste, dem Kopf benachbarte Abschnitt (13) einen größeren Durchmesser als der zweite, dem Kopf des Bolzens abgewandte Abschnitt hat.

## Revendications

1. Dispositif de sécurité comprenant un verrou formé avec une tête (13) à une extrêmité et une partie de tige (15) s'étendant à partir de ladite tête et formée avec une gorge (19) et un épaulement (21) à proximité de la seconde extrêmité, un mécanisme de verrouillage comprenant un capuchon d'épaulement (26) formé avec un orifice central à travers lequel la tige (15) du verrou peut s'étendre, un capuchon de nipple (27) fixé audit capuchon d'épaulement et ayant une partie de couvercle (33) pour recouvrir l'orifice central dudit capuchon d'épaulement, et un élément de ressort (36) comprenant des doigt de verrouillage (39–40) avec des extrêmités séparées pour former un orifice central qui est plus petit que ladite partie de tige dudit verrou, de sorte que la seconde extrêmité dudit verrou puisse être forcée dans ledit capuchon d'épaulement, ledit capuchon de nipple et ledit élément de ressort, de façon que lesdits doigts puissent être introduits dans ladite gorge (19) dudit verrou pour entrer en liaison mécanique avec ledit épaulement (21) pour verrouiller ledit mécanisme de verrouillage audit verrou, de façon qu'il ne puisse pas être déplacé sans destruction dudit verrou et/ou dudit mécanisme de verrouillage, caractérisé en ce que l'élément de ressort (36) présente un bord extérieur ayant la forme d'un disque, qui est maintenu entre le capuchon d'épaulement (26) et le capuchon de nipple (27) et aussi une partie centrale de forme tronconique dans laquelle des gorges (51–56) sont formées pour définir lesdits doigts de verrouillage (39–44).

2. Dispositif de sécurité selon la revendication 1, caractérisé en ce que ladite seconde extrêmité dudit verrou est conique (23) de façon à étaler lesdits doigts (39–44) dudit élément de ressort (36).

3. Dispositif de sécurité selon la revendication 1 ou 2, caractérisé en ce que ladite partie de tige (15) dudit verrou est constitué d'un matériau tel qu'elle puisse être pliée à 90° sans rupture ou fracture.

4. Dispositif de sécurité selon l'une quelconque des revendications précédentes, caractérisé en ce que ladite partie du tige dudit verrou présente deux parties, la première partie (15) proche de la tête (13) du verrou ayant un diamètre plus large que la seconde partie (18) éloignée de la tête dudit verrou.

FIG. 1

FIG. 2

FIG. 3

FIG. 4

FIG. 5